# EUROPÄISCHE PATENTSCHRIFT

(11) **EP 1 767 415 B1**
(45) Veröffentlichungstag und Bekanntmachung des Hinweises auf die Patenterteilung: **29.10.2008**
(21) Anmeldenummer: 06018290.4
(22) Anmeldetag: 01.09.2006
(51) Int. Cl.: B60R 25/10

(54) **Überwachungseinrichtung für den Innenraum eines Kraftfahrzeugs**
Monitoring device for a vehicle interior
Dispositif de surveillance de l'habitacle d'un véhicule

(30) Priorität: 26.09.2005 DE 102005046019
(43) Veröffentlichungstag der Anmeldung: 28.03.2007
(73) Patentinhaber: Hella KGaA Hueck & Co., 59557 Lippstadt (DE)
(72) Erfinder: Zwick, Hubert, Dipl.-Phys., 70173 Stuttgart (DE); Müller, Bernd, Dipl.-Ing., 79650 Schopfheim (DE)
(74) Vertreter: Huwer, Andreas

(56) Entgegenhaltungen:
- EP-A1- 0 050 751
- WO-A-02/43982
- DE-A1- 2 653 111
- JP-A- 57 056 770

## Beschreibung

Die Erfindung betrifft eine Überwachungseinrichtung für den Innenraum eines Kraftfahrzeugs, mit einem Trägerteil, an dem mindestens ein optischer Sender und ein diesem zugeordneter, ein Empfängerelement aufweisender optischer Empfänger vorgesehen sind, wobei das Empfängerelement mit einer Auswerteeinrichtung zur Auswertung von in dem Innenraum reflektierter optischer Strahlung des Senders verbunden ist.

Eine derartige Überwachungseinrichtung, die in ein Leuchtengehäuse einer Innenleuchte eingebaut ist, ist aus DE 44 17 710 A1 bekannt. Sie weist an dem Leuchtengehäuse mehrere IR-Sender und mehrere IR-Empfängerelemente zum Empfangen der von den IR-Sendern ausgesandten und in dem Innenraum reflektierten Strahlung. Den IR-Sendern und IR-Empfängerelementen ist eine einzige Glaslinse zugeordnet, die entsprechend der Position der IR-Sender und IR-Empfängerelemente den gewünschten Bestrahlungsraum und den gewünschten Überwachungsbereich gewährleisten. Dies wird zum Teil dadurch erreicht, dass die eine Glaslinse mit Fenstern versehen ist, welche einzelnen IR-Sendern bzw. IR-Empfängerelementen zugeordnet sind und welche diesen angepasste optische Eigenschaften besitzen. Durch diese Anordnung aus IR-Sendern mit zugehörigen Fenstern soll es nach Angabe der Offenlegungsschrift möglich sein, einen besonders großen lückenlosen Bestrahlungsbereich zu verwirklichen, der dadurch gebildet wird, dass die Bestrahlungsbereiche der einzelnen IR-Sender mit ihren Fenstern sich zu einem gesamten Bestrahlungsbereich zusammenfügen. Entsprechendes gilt für den Überwachungsraum, der sich aus den einzelnen Überwachungsräumen der IR-Empfängerelemente mit ihren zugeordneten Fenstern ergibt. Die Überwachungseinrichtung weist jedoch einen relativ komplizierten Aufbau auf und ist entsprechend teuer. Dies ist wird insbesondere bei einer Verwendung der Überwachungseinrichtung zur Steuerung einer Innenleuchte für den Laderaum eines Kraftfahrzeugs als ungünstig empfunden. Derartige Innenleuchten werden nämlich bisher über Türkontakte angesteuert, die sehr kostengünstig realisierbar sind. Ein Nachteil der Türkontakte besteht jedoch darin, dass die Innenleuchte unnötig viel Strom verbraucht, wenn die Fahrzeugtüre längere Zeit offen steht ohne dass der Benutzer des Kraftfahrzeugs im Laderaum anwesend ist.

Es besteht deshalb die Aufgabe, eine Überwachungseinrichtung der eingangs genannten Art zu schaffen, die einen großen Überwachungsbereich aufweist, aber dennoch einen einfachen und kostengünstigen Aufbau ermöglicht.

Erfindungsgemäß wird diese Aufgabe dadurch gelöst, dass dem Empfängerelement eine Empfängeroptik zugeordnet ist, die derart ausgestaltet ist, dass aus dem Innenraum unter unterschiedlichen Empfangsrichtungen auf die Empfängeroptik auftreffende, etwa parallel zueinander verlaufenden Lichtstrahlen aufweisende Lichtbündel jeweils auf das Empfängerelement gebündelt werden.

In vorteilhafter Weise ist es dadurch möglich, mit nur einem einzigen Empfängerelement mehrere, in unterschiedlichen Richtungen zu dem Empfängerelement angeordnete Raumsegmente gleichzeitig zu überwachen. Gegenüber einer Überwachungseinrichtung mit mehreren Empfängerelementen kann dadurch vor allem die Auswerteeinrichtung sehr einfach und kostengünstig aufgebaut sein. Unter einem Lichtbündel bzw. einem Lichtstrahl wird optische Strahlung im sichtbaren und unsichtbaren Bereich verstanden, insbesondere im Infrarotbereich.

Vorteilhaft ist, wenn mindestens zwei Empfangsrichtungen quer und vorzugsweise etwa rechtwinklig zueinander angeordnet sind. Bei einer Überwachungseinrichtung zur Steuerung einer im Laderaum eines Kraftfahrzeugs angeordneten Innenleuchte, wie z.B. einem Lieferwagen, können dann mit Hilfe einer beispielsweise zentral am Dach angeordneten Überwachungseinrichtung gleichzeitig mehrere Zugänge zu dem Innenraum überwacht werden, wie z.B. die linke und/oder rechte Seitentüre und/oder eine Hecktüre bzw. Heckklappe des Laderaums.

Bei einer bevorzugten Ausgestaltung der Erfindung ist an dem Trägerteil für jede Empfangsrichtung jeweils mindestens ein optischer Sender vorgesehen, der mit seiner Hauptabstrahlrichtung etwa in die zu der betreffenden Empfangsrichtung entgegengesetzte Richtung weist. Dadurch ist es insbesondere möglich, mehrere Raumsegmente unterschiedlich stark zu bestrahlen, so dass beim Auftreten einer Bewegung in dem Detektionsbereich eine entsprechend starke Veränderung des Messsignals des Empfängerelements auftritt. Somit können mit der Überwachungseinrichtung Bewegungen noch besser registriert werden.

Bei einer zweckmäßigen Ausgestaltung der Erfindung weisen die optischen Sender jeweils ein Sendeelement und eine Senderoptik auf, wobei das Sendeelement zum Bündeln der von der Senderoptik ausgesandten Strahlung jeweils im Brennpunkt der ihr zugeordneten Senderoptik angeordnet ist. Durch diese Maßnahme kann eine für die Detektion von Bewegungen günstige Intensitätsverteilung der Strahlung in dem Bestrahlungsbereich erreicht werden.

Die Empfängeroptik und/oder mindestens eine Senderoptik kann (können) als lichtbrechende Optik ausgebildet sein oder eine solche aufweist (aufweisen). Die lichtbrechende Optik besteht dabei bevorzugt aus glasklarem Kunststoff, beispielsweise aus Polycarbonat.

Es ist aber auch denkbar, dass die Empfängeroptik und/oder mindestens eine Senderoptik als reflektierende Optik ausgebildet ist (sind) oder eine solche aufweist (aufweisen). Dabei kann die reflektierende Optik einen mit einer Metallisierung beschichteten konkaven Kunststoffkörper aufweisen.

Vorteilhaft ist, wenn die Empfängeroptik und/oder die Senderoptiken einstückig mit dem Trägerteil verbunden sind. Die Überwachungseinrichtung ist dann noch kostengünstiger herstellbar und montierbar.

Bei einer Weiterbildung der Erfindung weist die Empfängeroptik mindestens zwei Reflektorbereiche auf, die jeweils auf der Oberfläche eines gedachten Rotationsparaboloids angeordnet sind, wobei die Rotationsachsen der den einzelnen Reflektorbereichen zugeordneten Rotationsparaboloide quer zueinander verlaufen. Durch diese Maßnahme kann eine besonders gute Fokussierung von aus unterschiedlichen Richtungen auf die Empfängeroptik auftretenden Lichtbündeln mit parallel zueinander verlaufenden Lichtstrahlen erreicht werden. Unter einem Rotationsparaboloid wird auch ein an einen Rotationsparaboloiden angenäherter Körper verstanden, der an seiner Oberfläche mehrere im Wesentlichen ebene oder nur in eine Richtung gekrümmte Flächen aufweist, die tangential zur Oberfläche des exakten Rotationsparaboloids ausgerichtet sind.

Besonders vorteilhaft ist, wenn die Senderoptik mindestens zwei Teilbereiche aufweist, die jeweils auf der Oberfläche eines gedachten Rotationsparaboloids angeordnet sind, und wenn die Rotationsachsen der den einzelnen Teilbereichen zugeordneten Rotationsparaboloide quer zueinander verlaufen. Dadurch können mit nur einem Sendeelement mehrere, in unterschiedliche Richtungen weisende Lichtbündel erzeugt werden, die jeweils etwa parallel zueinander verlaufende Lichtstrahlen haben. Durch diese Maßnahme kann auf einfache Weise eine für die Detektion von Bewegungen günstige Beleuchtung des Bestrahlungsbereichs erreicht werden.

Bei einer zweckmäßigen Ausgestaltung der Erfindung weist das Trägerteil Befestigungsstellen auf, die mit einer Leiterplatte verbunden sind, auf der das Empfängerelement und die Sendeelemente angeordnet sind, wobei das das Trägerteil mit seiner Haupterstreckungsebene etwa parallel zur Ebene der Leiterplatte angeordnet ist. Die Überwachungseinrichtung ermöglicht dann einen kompakten und kostengünstigeren Aufbau.

Bei einer bevorzugten Ausführungsförm der Erfindung unterbricht (unterbrechen) die Empfängeroptik und/oder die Senderoptik eine gerade Verbindungslinie zwischen dem Sendeelement und dem Empfängerelement, wobei die Empfängeroptik und/oder die Senderoptik vorzugsweise direkt auf der Leiterplatte angeordnet ist (sind). Das Empfängerelement ist dann durch die Empfängeroptik und/oder die Senderoptik gegen von dem Sendeelement ausgesandtes Streulicht abgeschattet.

Nachfolgend ist ein Ausführungsbeispiel der Erfindung anhand der Zeichnung näher erläutert. Es zeigen:
- Fig. 1: eine Aufsicht auf eine Überwachungseinrichtung für den Innenraum eines Kraftfahrzeugs,
- Fig. 2: einen vergrößerten Ausschnitt aus Fig. 1, der eine Empfängeroptik zeigt, wobei beispielhaft auch einige an der Empfängeroptik reflektierte Lichtstrahlen dargestellt sind, und
- Fig. 3: einen Längsschnitt durch die Empfängeroptik und ein in deren Brennpunkt angeordnetes Empfängerelement, wobei nur die in der Schnittebene liegenden Teile der Überwachungseinrichtung dargestellt sind.

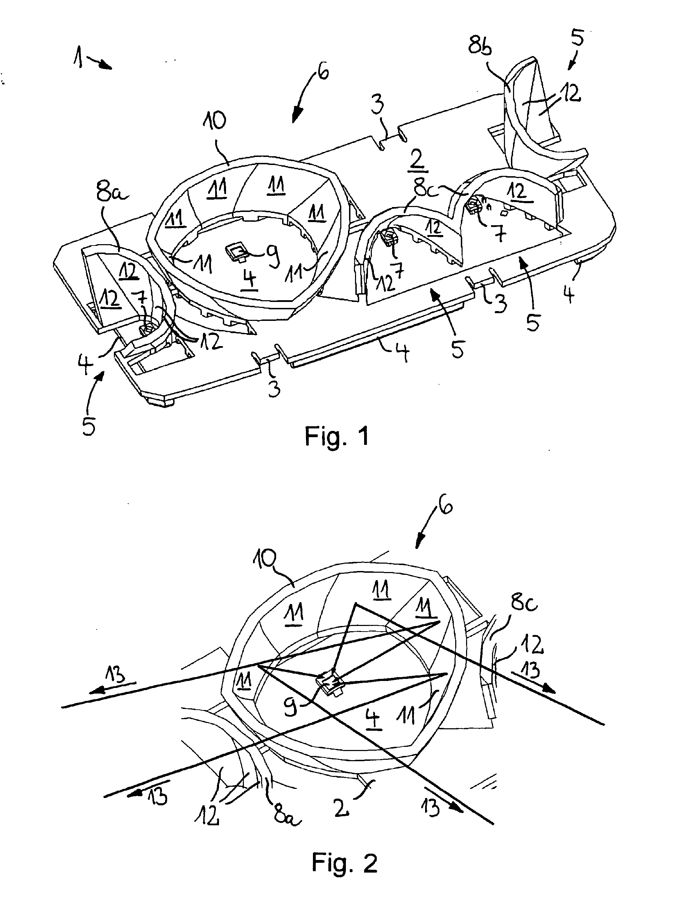

Eine in Fig. 1 im Ganzen mit 1 bezeichnete Überwachungseinrichtung für den Innenraum eines in der Zeichnung nicht näher dargestellten Kraftfahrzeugs weist ein etwa plattenförmiges Trägerteil 2 auf, das mehrere Befestigungsstellen 3 hat, die mit einer elektrischen Leiterplatte 4 verbunden sind. Die Befestigungsstellen 3 sind als einstückig mit der Leiterplatte 4 verbundene Rasthaken ausgebildet, die jeweils einen Randbereich der Leiterplatte 4 formschlüssig hintergreifen. Die Leiterplatte 3 ist mit ihrer Erstreckungsebene etwa parallel zu dem Trägerteil 2 angeordnet. Die Überwachungseinrichtung 1 ist am Dach eines Innenraums des Kraftfahrzeugs angeordnet, vorzugsweise eines Laderaums.

An dem Trägerteil 2 sind mehrere optische Sender 5 und ein einziger damit zusammenwirkender optischer Empfänger 6 vorgesehen. Die Sender 5 haben als optische Sendeelemente 7 jeweils eine auf der Leiterplatte 4 angeordnet Infrarot-Leuchtdiode, die mit ihrer Abstrahlseite einer in der Leiterplatte 4 vorgesehenen Durchtrittsöffnung zugewandt ist. Im Abstrahlbereich der Sendeelemente 7 weisen die Sender jeweils eine Senderoptik 8a, 8b, 8c auf, welche die von dem Sendeelement 7 ausgesandte Strahlung umlenkt und zu einem Lichtbündel mit etwa parallelen Lichtstrahlen bündelt. Eine erste Senderoptik 8a projiziert die optische Strahlung in Richtung auf eine linke Fahrzeugtüre, eine zweite Senderoptik 8b projiziert die optische Strahlung in Richtung auf eine rechte Fahrzeugtüre und zwei dritte Senderoptiken 8c lenken optische Strahlung in Richtung auf eine Hecktüre- oder Heckklappe um. Die Senderoptiken 8a, 8b strahlen etwa in zueinander entgegengesetzte Richtungen und die Senderoptik 8c unter einem Winkel von etwa 90° quer dazu ab. Als Senderoptiken 8a, 8b, 8c sind Reflektoren vorgesehen, die einstückig mit dem Trägerteil 2 ausgebildet sind, beispielsweise als KunststofF Spritzgussteil, das im Bereich der Senderoptiken 8a, 8b, 8c eine Metallisierung aufweist.

Der Empfänger 6 hat als optisches Empfängerelement 9 einen auf der Leiterplatte 4 angeordneten Infrarot-Detektor, der hinter einer in dem Trägerteil 2 vorgesehenen Lochung vorgesehen ist. Dem Empfängerelement 9 ist eine Empfängeroptik 10 zugeordnet, die derart ausgestaltet ist, dass aus dem Innenraum unter unterschiedlichen Empfangsrichtungen 13 auf die Empfängeroptik 10 auftreffende, etwa parallel zueinander verlaufenden Lichtstrahlen aufweisende Lichtbündel jeweils auf dasselbe Empfängerelement 9 gebündelt werden. Die Empfangsrichtungen 13 sind so gewählt, dass die von den Sendern 5 ausgesandte Strahlung auf den Empfänger 6 auftrifft, wenn die Strahlung in dem Innenraum an einem Objekt reflektiert wird.

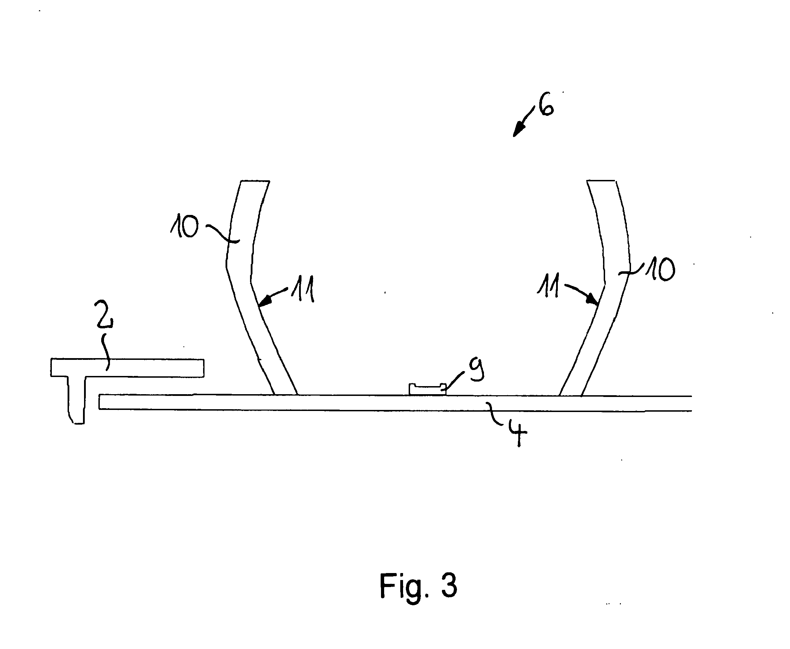

Wie in Fig. 2 besonders gut erkennbar ist, ist die Empfängeroptik 10 als einstückig mit dem Trägerteil verbundener Reflektor ausgestaltet. Die Empfängeroptik 10 weist mehrere Reflektorbereiche 11 auf, die jeweils auf der Oberfläche eines gedachten Rotationsparaboloids angeordnet sind. Die Rotationsparaboloide haben denselben Brennpunkt, sind jedoch mit ihren Rotationsachsen um den Brennpunkt relativ zueinander verkippt. In dem gemeinsamen Brennpunkt ist die Empfängeroptik 10 angeordnet. Die Reflektorbereiche 11 grenzen direkt aneinander an und/oder sind durch einen Übergangsbereich, der eine Freiformfläche, eine Stufe und/oder einen Absatz aufweisen kann, miteinander verbunden. In Fig. 2 und 3 ist erkennbar, dass die Reflektorbereiche 11 mit ihrem der Empfängeroptik 10 zugewandten Randbereich an die Lochung des Trägerteils 2 angrenzen. Wie in Fig. 3 erkennbar ist, grenzt die Empfängeroptik 10 direkt an die Leiterplatte 4 an. Dadurch wird eventuelles seitlich von den Sendeelementen 7 ausgesandtes Streulicht gegen das Empfängerelement 9 abgeschattet.

In entsprechender Weise haben die Senderoptiken 8a, 8b mehrere Teilbereiche 12, die jeweils auf der Oberfläche eines gedachten Rotationsparaboloids angeordnet sind. Auch diese Rotationsparaboloide haben jeweils denselben Brennpunkt und sind mit ihren Rotationsachsen relativ zueinander verkippt. In dem gemeinsamen Brennpunkt ist die Senderoptik 8a, 8b angeordnet. Die Teilbereiche 12 grenzen direkt aneinander an und/oder sind durch einen Übergangsbereich, der eine Freiformfläche, eine Stufe und/oder einen Absatz aufweisen kann, miteinander verbunden. In Fig. 1 ist erkennbar, dass die Teilbereiche 12 mit ihrem der Senderoptik 8a, 8b, 8c zugewandten Randbereich an die Durchtrittsöffnung der Leiterplatte 4 angrenzen.

Das Empfängerelement 9 ist mit einem Messsignaleingang einer in der Zeichnung nicht näher dargestellten Auswerteeinrichtung verbunden, die auf der Leiterplatte 4 angeordnet ist. Die Auswerteeinrichtung wertet die in dem Innenraum reflektierte, von den Sendeelementen 7 ausgesandte optische Strahlung im Hinblick auf Veränderungen, wie sie z.B. auftreten, wenn sich in dem überwachten Bereich des Fahrzeug-Innenraums eine Person bewegt, aus. Ein Steuersignalausgang der Auswerteeinrichtung ist mit einer Innenleuchte verbunden. Beim Detektieren einer einen vorgegebenen Grenzwert betragsmäßig überschreitenden Veränderung in dem Messsignal des Empfängerelements 9 wird die Innenleuchte eingeschaltet. Wenn während einer vorgegebenen Zeitdauer in dem Überwachungsbereich keine ausreichende Signalveränderung mehr registriert wird, wird die Innenleuchte über den Steuersignalausgang abgeschaltet.

## Patentansprüche

1. Überwachungseinrichtung (1) des Innenraums eines Kraftfahrzeugs, mit einem Trägerteil (2), an dem mindestens ein optischer Sender (5) und ein diesem zugeordneter, ein Empfängerelement (9) aufweisender optischer Empfänger (6) vorgesehen sind, wobei das Empfängerelement (9) mit einer Auswerteeinrichtung zur Auswertung von in dem Innenraum reflektierter optischer Strahlung des Senders (5) verbunden ist, **dadurch gekennzeichnet, dass** dem Empfängerelement (9) eine Empfängeroptik (10) mit Reflektoren auf der Oberfläche eines gedachten Paraboloids zugeordnet ist, die derart ausgestaltet ist, dass aus dem Innenraum unter unterschiedlichen Empfangsrichtungen (13) auf die Empfängeroptik (10) auftreffende etwa parallel zueinander verlaufenden Lichtstrahlen aufweisende Lichtbündel jeweils auf das Empfängerelement (9) gebündelt werden.

2. Überwachungseinrichtung (1) nach Anspruch 1, **dadurch gekennzeichnet, dass** mindestens zwei Empfangsrichtungen (13) quer und vorzugsweise etwa rechtwinklig zueinander angeordnet sind.

3. Überwachungseinrichtung (1) nach Anspruch 1 oder 2, **dadurch gekennzeichnet, dass** an dem Trägerteil (2) für jede Empfangsrichtung (13) jeweils mindestens ein optischer Sender (5) vorgesehen ist, der mit seiner Hauptabstrahlrichtung etwa in die zu der betreffenden Empfangsrichtung (13) entgegengesetzte Richtung weist.

4. Überwachungseinrichtung (1) nach einem der Ansprüche 1 bis 3, **dadurch gekennzeichnet, dass** die optischen Sender (5) jeweils ein Sendeelement (7) und eine Senderoptik (8a, 8b, 8c) aufweisen, und dass das Sendeelement (7) zum Bündeln der von der Senderoptik (8a, 8b, 8c) ausgesandten Strahlung jeweils im Brennpunkt der ihr zugeordneten Senderoptik (8a, 8b, 8c) angeordnet ist.

5. Überwachungseinrichtung (1) nach einem der Ansprüche 1 bis 4, **dadurch gekennzeichnet, dass** die Empfängeroptik (10) und/oder mindestens eine Senderoptik (8a, 8b, 8c) als lichtbrechende Optik ausgebildet ist (sind) oder eine solche aufweist (aufweisen).

6. Überwachungseinrichtung (1) nach einem der Ansprüche 1 bis 5, **dadurch gekennzeichnet, dass** die Empfängeroptik (10) und/oder mindestens eine Senderoptik (8a, 8b, 8c) als reflektierende Optik ausgebildet ist (sind) oder eine solche aufweist (aufweisen).

7. Überwachungseinrichtung (1) nach Anspruch 1 bis 6, **dadurch gekennzeichnet, dass** die Empfängeroptik (10) und/oder die Senderoptiken (8a, 8b, 8c) einstückig mit dem Trägerteil (2) verbunden sind.

8. Überwachungseinrichtung (1) nach Anspruch 1 bis 7, **dadurch gekennzeichnet, dass** die Empfängeroptik (10) mindestens zwei Reflektorbereiche (11) aufweist, die jeweils auf der Oberfläche eines gedachten Rotationsparaboloids angeordnet sind, und dass die Rotationsachsen der den einzelnen Reflektorbereichen zugeordneten Rotationsparaboloide quer zueinander verlaufen.

9. Überwachungseinrichtung (1) nach Anspruch 1 bis 8, **dadurch gekennzeichnet, dass** die Senderoptik (8a, 8b, 8c) mindestens zwei Teilbereiche (12) auf weist, die jeweils auf der Oberfläche eines gedachten Rotationsparaboloids angeordnet sind, und dass die Rotationsachsen der den einzelnen Teilbereichen (12) zugeordneten Rotationsparaboloide quer zueinander verlaufen.

10. Überwachungseinrichtung (1) nach einem der Ansprüche 1 bis 9, **dadurch gekennzeichnet, dass** das Trägerteil (2) Befestigungsstellen (3) aufweist, die mit einer Leiterplatte (4) verbunden sind, auf der das Empfängerelement (9) und die Sendeelemente (7) angeordnet sind, und das das Trägerteil (2) mit seiner Haupterstreckungsebene etwa parallel zur Ebene der Leiterplatte (4) angeordnet ist.

11. Überwachungseinrichtung (1) nach einem der Ansprüche 1 bis 10, **dadurch gekennzeichnet, dass** die Empfängeroptik (10) und/oder die Senderoptik (8a, 8b, 8c) eine gerade Verbindungslinie zwischen dem Sendeelement (7) und dem Empfängerelement (9) unterbricht (unterbrechen) und vorzugsweise direkt auf der Leiterplatte (4) angeordnet ist (sind).

## Claims

1. Monitoring device (1) of the interior of a motor vehicle, having a carrier part (2) on which at least one optical transmitter (5) and one optical receiver (6) which is assigned thereto and has a receiver element (9) are provided, wherein the receiver element (9) is connected to an evaluation device for evaluating optical radiation of the transmitter (5) which is reflected in the interior, **characterized in that** a receiver optics unit (10) having reflectors on the surface of a virtual paraboloid is assigned to the receiver element (9) and is configured in such a way that light beams which are incident on the receiver optics unit (10) at different reception directions (13) from the interior and have light rays which extend approximately parallel to one another are respectively focused onto the receiver element (9).

2. Monitoring device (1) according to Claim 1, **characterized in that** at least two reception directions (13) are arranged transversely with respect to one another and preferably approximately at right angles with respect to one another.

3. Monitoring device (1) according to Claim 1 or 2, **characterized in that** in each case at least one optical transmitter (5) which points with its main irradiation direction approximately in the opposite direction to the respective reception direction (13) is provided for each reception direction (13) on the carrier part (2).

4. Monitoring device (1) according to one of Claims 1 to 3, **characterized in that** the optical transmitters (5) each have a transmitter element (7) and a transmitter optics unit (8a, 8b, 8c), and **in that**, in order to focus the radiation emitted by the transmitter optics unit (8a, 8b, 8c), the transmitter element (7) is respectively arranged at the focal point of the transmitter optics unit (8a, 8b, 8c) assigned to it.

5. Monitoring device (1) according to one of Claims 1 to 4, **characterized in that** the receiver optics unit (10) and/or at least one transmitter optics unit (8a, 8b, 8c) is (are) embodied as a refractive optics unit or has (have) such a unit.

6. Monitoring device (1) according to one of Claims 1 to 5, **characterized in that** the receiver optics unit (10) and/or at least one transmitter optics unit (8a, 8b, 8c) is (are) embodied as a reflective optics unit or has (have) such a unit.

7. Monitoring device (1) according to Claims 1 to 6, **characterized in that** the receiver optics unit (10) and/or the transmitter optics units (8a, 8b, 8c) are integrally connected to the carrier part (2).

8. Monitoring device (1) according to Claims 1 to 7, **characterized in that** the receiver optics unit (10) has at least two reflector regions (11) which are each arranged on the surface of a virtual rotational paraboloid, and **in that** the rotational axes of the rotational paraboloids which are assigned to the individual reflector areas extend transversely with respect to one another.

9. Monitoring device (1) according to Claims 1 to 8, **characterized in that** the transmitter optics unit (8a, 8b, 8c) has at least two areas (12) which are each arranged on the surface of a virtual rotational paraboloid, and **in that** the rotational axes of the rotational paraboloids which are assigned to the individual areas (12) extend transversely with respect to one another.

10. Monitoring device (1) according to one of Claims 1 to 9, **characterized in that** the carrier part (2) has attachment points (3) which are connected to a printed circuit board (4) on which the receiver element (9) and the transmitter element (7) are arranged, and **in that** the carrier part (2) is arranged with the plane of its main extent approximately parallel to the plane of the printed circuit board (4).

11. Monitoring device (1) according to one of Claims 1 to 10, **characterized in that** the receiver optics unit (10) and/or the transmitter optics unit (8a, 8b, 8c) interrupts (interrupt) a straight connecting line between the transmitter element (7) and the receiver element (9), and is (are) preferably arranged directly on the printed circuit board (4).

## Revendications

1. Dispositif de surveillance (1) de l'espace intérieur d'un véhicule automobile, comprenant une partie porteuse (2) sur laquelle sont prévus au moins un émetteur optique (5) et un récepteur optique (6) associé à celui-ci et présentant un élément récepteur (9), l'élément récepteur (9) étant relié avec un dispositif d'interprétation pour interpréter le rayonnement optique de l'émetteur (5) réfléchi dans l'espace intérieur, **caractérisé en ce qu'**une optique de réception (10) munie de réflecteurs sur la surface d'un paraboloïde imaginaire est associée à l'élément récepteur (9), laquelle est configurée de telle sorte que les faisceaux lumineux qui présentent des rayons lumineux s'étendant à peu près parallèlement les uns aux autres et venant heurter l'optique de réception (10), en provenance de l'intérieur, sous des directions de réception (13) différentes sont à chaque fois concentrés sur l'élément récepteur (9).

2. Dispositif de surveillance (1) selon la revendication 1, **caractérisé en ce qu'**au moins deux directions de réception (13) sont disposées transversalement et de préférence à peu près perpendiculairement l'une par rapport à l'autre.

3. Dispositif de surveillance (1) selon la revendication 1 ou 2, **caractérisé en ce qu'**au moins un émetteur optique (5) est à chaque fois prévu sur la partie porteuse (2) pour chaque dispositif de réception (13), lequel est orienté avec son sens de rayonnement principal approximativement dans la direction opposée à la direction de réception (3) concernée.

4. Dispositif de surveillance (1) selon l'une des revendications 1 à 3, **caractérisé en ce que** les émetteurs optiques (5) présentent respectivement un élément d'émission (7) et une optique d'émission (8a, 8b, 8c) et que l'élément d'émission (7) est à chaque fois disposé au point focal de l'optique d'émission (8a, 8b, 8c) qui lui est associée afin de concentrer le rayonnement émis par l'optique d'émission (8a, 8b, 8c).

5. Dispositif de surveillance (1) selon l'une des revendications 1 à 4, **caractérisé en ce que** l'optique de réception (10) et/ou au moins une optique d'émission (8a, 8b, 8c) est (sont) réalisée(s) sous la forme d'une optique réfringente ou présente (présentent) une telle optique réfringente.

6. Dispositif de surveillance (1) selon l'une des revendications 1 à 5, **caractérisé en ce que** l'optique de réception (10) et/ou au moins une optique d'émission (8a, 8b, 8c) est (sont) réalisée(s) sous la forme d'une optique réfléchissante ou présente (présentent) une telle optique réfléchissante.

7. Dispositif de surveillance (1) selon l'une des revendications 1 à 6, **caractérisé en ce que** l'optique de réception (10) et/ou les optiques d'émission (8a, 8b, 8c) sont reliées d'un seul tenant avec la partie porteuse (2).

8. Dispositif de surveillance (1) selon l'une des revendications 1 à 7, **caractérisé en ce que** l'optique de réception (10) présente au moins deux zones de réflexion (11) qui sont respectivement disposées sur la surface d'un paraboloïde de rotation imaginaire et que les axes de rotation des paraboloïdes de rotation associés aux zones de réflexion individuelles s'étendent transversalement les uns par rapport aux autres.

9. Dispositif de surveillance (1) selon l'une des revendications 1 à 8, **caractérisé en ce que** l'optique d'émission (8a, 8b, 8c) présente au moins deux zones partielles (12) qui sont respectivement disposées sur la surface d'un paraboloïde de rotation imaginaire et que les axes de rotation des paraboloïdes de rotation associés aux zones partielles (12) individuelles s'étendent transversalement les uns par rapport aux autres.

10. Dispositif de surveillance (1) selon l'une des revendications 1 à 9, **caractérisé en ce que** la partie porteuse (2) présente des points de fixation (3) qui sont reliés avec un circuit imprimé (4) sur lequel sont disposés l'élément récepteur (9) et l'élément d'émission (7) et que le plan de projection principal de la partie porteuse (2) est disposé à peu près parallèlement au plan du circuit imprimé (4).

11. Dispositif de surveillance (1) selon l'une des revendications 1 à 10, **caractérisé en ce que** l'optique de réception (10) et/ou l'optique d'émission (8a, 8b, 8c) interrompt (interrompent) une ligne de liaison droite entre l'élément d'émission (7) et l'élément récepteur (9) et est (sont) de préférence disposées directement sur le circuit imprimé (4).
